# EUROPÄISCHE PATENTSCHRIFT

(11) **EP 1 745 989 B1**
(45) Veröffentlichungstag und Bekanntmachung des Hinweises auf die Patenterteilung: **05.03.2008**
(21) Anmeldenummer: 06011961.7
(22) Anmeldetag: 09.06.2006
(51) Int. Cl.: B60R 21/215

(54) **Airbagabdeckung mit unsichtbare Airbagreisslinie**
Airbag cover with invisible tear line
Couvercle pour airbag avec ligne de rupture invisible

(30) Priorität: 22.07.2005 DE 102005034354
(43) Veröffentlichungstag der Anmeldung: 24.01.2007
(73) Patentinhaber: Lisa Dräxlmaier GmbH, 84137 Vilsbiburg (DE)
(72) Erfinder: Müller, Henry, Dr., 84030 Landshut (DE); Aichner, Rudolf, 84178 Kirchberg (DE)
(74) Vertreter: HOFFMANN EITLE

(56) Entgegenhaltungen:
- DE-A1- 10 229 962
- DE-A1- 10 361 581
- DE-A1- 19 819 573
- FR-A1- 2 721 876
- US-A- 5 443 777
- US-A1- 2004 164 531

## Beschreibung

### Feld der Erfindung

Die Erfindung betrifft eine Airbagabdeckung, insbesondere zur Verwendung in Kraftfahrzeugen, mit einem Formteil und einer das Formteil überdeckenden Sichtbedeckung aus Leder oder einem lederähnlichen Material. Darüber hinaus betrifft die Erfindung ein Verfahren zum Abdecken eines oberhalb eines Airbags angeordneten Formteils mit einer partiell geschwächten Sichtbedeckung.

### Hintergrund der Erfindung

Insbesondere in Kraftfahrzeugen der Oberklasse und oberen Mittelklasse werden große Teile der Innenausstattung, so beispielsweise das Lenkrad, die Instrumententafel und die Türinnenverkleidungen aus Gründen einer ansprechenden Optik mit Leder oder einem lederähnlichen Material bezogen. Das Leder dient dabei auch als Sichtbedeckung solcher Teile des Fahrzeuginnenraums, unter denen Airbagmodule zum Schutz der Insassen im Falle eines Aufpralls des Fahrzeugs auf ein Hindernis angebracht sind.

Regelmäßig ist dabei ein Airbagmodul unter einem mit einer Sichtbedeckung belegten Formteil angeordnet, wobei das Formteil so ausgestaltet ist, dass beim Auslösen des Airbags Teile des Formteils entlang vorab definierter Klapp- oder Aufreißlinien so verschwenken, dass die Entfaltung des Airbags nicht oder nur gering behindert wird. Bei der Ausgestaltung der Sichtbedeckung des Formteils ist dabei ebenfalls darauf zu achten, dass die für die Sichtbedeckung verwendeten Materialien eine Verschwenkung der oben genannten Teile des Formteils und die Entfaltung des Airbags nicht störend beeinflussen.

Daher wurde früher entweder eine Aufreißnaht in die aus Leder oder lederähnlichem Material gefertigten Sichtbedeckungen eingebracht oder, wo dies aus Gründen der Optik erwünscht ist, eine gewünschte Aufreißlinie nicht sichtbar in der Form eines Hinterschnitts in das Leder eingebracht. Die Tiefe des Hinterschnitts variierte dabei üblicherweise von einem maximalen Wert im Bereich der gewünschten Risseinleitung bis hin zu einem minimalen Wert in den Bereichen, die vom Risseinleitungsbereich der Aufreißlinie am weitesten entfernt sind. Die Werkzeuge zur Einbringung eines derartigen Hinterschnitts sind jedoch äußerst kostenintensiv. Darüber hinaus gestaltet sich auch die Werkzeugführung insbesondere im Hinblick auf die Einstellung unterschiedlicher Schnitttiefen als besonders aufwändig.

Die DE 195 16 230 C2 offenbart darüber hinaus eine Abdeckung für einen Airbag, bei dem eine das Formteil überdeckende Sichtbedeckung im Bereich der Sollbruchstellen des Formteils eine partielle Materialdickenreduzierung aufweist, die durch Abtrag von Material der Sichtbedeckung erzeugt wird. Dieser Abtrag kann sowohl auf der dem Formteil zugewandten als auch der dem Formteil abgewandten Seite der Sichtbedeckung eingebracht werden. Durch den in der Sichtbedeckung vorgenommenen Materialabtrag wird eine Geometrie mit kurvenförmigem Übergang vom nicht geschwächten zum geschwächten Bereich zur Verfügung gestellt.

Dabei wird in der DE 195 16 230 C2 das so partiell in seiner Dicke reduzierte Leder direkt auf ein formsteifes Formteil, beispielsweise eine Lenkradabdeckung, aufgebracht. Die auf die Sichtbedeckung insbesondere im Bereich der reduzierten Materialdicke einwirkenden Kräfte werden dabei von der zwischen Formteil und Sichtbedeckung aufgebrachten Klebstoffschicht aufgenommen, wobei die Minimierung eines seitlichen Verzugs der Sichtbedeckung besonders vorteilhaft durch die innige Verbindung zwischen Sichtbedeckung und formsteifem Untergrund gewährleistet wird.

Eine Airbagabdeckung gemäß dem Oberbegriff des Anspruchs 1 ist aus DE-A-198 19 573 bekannt.

Aus Gründen einer verbesserten Haptik wurden in den letzten Jahren aber im Bereich der Instrumententafeln und somit auch im Bereich von Airbagabdeckungen die als Sichtbedeckung verwendeten Leder oder lederähnlichen Materialien mit wenigstens einer Schicht unterfüttert, die eine größere Weichheit aufweist als das auch in diesem Fall weiterhin verwendete vergleichsweise steife Formteil. Derartige Materialien sind beispielsweise Abstandsgewirke, Schaumstoffe, Vliesse oder dergleichen. Diese werden, wie oben bereits erwähnt, mit einem Leder oder lederähnlichen Material bedeckt, welches im Bereich der gewünschten Aufreißlinie einen Hinterschnitt mit über die Länge der Aufreißlinie variabler Tiefe aufweist. Durch die geringere Fähigkeit der Schichten aus weicherem Material, die auf die Sichtbedeckung beispielsweise bei Klimawechselbeanspruchungen oder partieller Erwärmung durch intensive Sonneneinstrahlung einwirkenden Kräfte parallel zur Oberfläche der Sichtbedeckung aufzunehmen, ist in derartige Fällen regelmäßig das Einbringen zumindest einer weiteren Zwischenschicht aus einem Folienmaterial erforderlich. Intensive durch Klimawechsel hervorgebrachte Materialbeanspruchungen haben sich jedoch in der Praxis auch bei einer derartigen Ausgestaltung als optisch nicht hinreichend zufriedenstellend erwiesen.

### Aufgabe der Erfindung

Es war daher eine Aufgabe der Erfindung, eine Airbagabdeckung sowie ein Verfahren zu deren Herstellung zur Verfügung zu stellen, welche die aus dem Stand der Technik bekannten Nachteile überwinden.

Diese Aufgabe wird durch die Airbagabdeckung mit den Merkmalen des Anspruchs 1 sowie das Verfahren mit den Merkmalen des Anspruchs 18 gelöst. Vorteilhafte Ausgestaltungen der Erfindung befinden sich in den jeweils abhängigen Ansprüchen 2 bis 17 sowie 19 bis 23.

Gemäß eines ersten Aspekts der Erfindung wird eine Airbagabdeckung zur Verfügung gestellt, die aus einem Formteil, wenigstens einer Schicht aus einem Material, das weicher als das Material des Formteils ist, sowie einer darüber angeordneten Sichtbedeckung aus Leder oder einem lederähnlichen Material besteht, wobei die Sichtbedeckung eine partielle Schwächung aufweist und der Übergang vom geschwächten Bereich zum nicht geschwächten Bereich stetig ausgestaltet ist.

Im erfindungsgemäßen Sinne wird hierbei unter dem Begriff "stetig" jede Form des Übergangs verstanden, die ohne Ecken oder Grate und Stufen ausgestaltet ist. Die Sichtbedeckung beschreibt dabei im Querschnitt eine Kurve, die im Bereich der Übergänge von geschwächtem zu nicht geschwächtem Bereich monoton steigend oder monoton fallend ist.

In überraschender Weise hat sich dabei herausgestellt, dass derartig bearbeitete Sichtbedeckungen ohne zwingend erforderliche Zugabe einer Folie unterhalb der Sichtbedeckung und oberhalb eines die Haptik verbessernden weichen Materials sowie oberhalb des vergleichsweise steifen Formteils auch radikale Klimawechselbeanspruchungen selbst in frisch aufgelegtem Zustand übersteht, ohne dabei deutlich sichtbare Störungen der Optik zu bedingen. Dabei kann in überaus überraschender Weise zudem auf eine aufwändige Prozesssteuerung, bei der über den Verlauf der gewünschten Aufreißlinie unterschiedliche Schnitttiefen einzustellen wären, gänzlich verzichtet werden.

Die erfindungsgemäße Airbagabdeckung zeigt auch nach Klimawechseltests, bei denen die Sichtbedeckung Temperaturänderungen zwischen 0°C und 105°C sowie gleichzeitig einer intensiven simulierten Sonnenstrahlung ausgesetzt ist, selbst dann, wenn das Leder oder lederähnliche Material frisch auf dem Formteil aufgebracht wurde, keine optischen Beeinträchtigungen im Bereich der Aufreißlinie und bietet über die gesamte Lebensdauer das gewünschte Aufreißverhalten bei Auslösung des Airbags. Das Leder wird dabei mittels geeigneter Vorrichtungen, wie sie beispielsweise in der DE 39 22 756 C2 beschrieben sind und bei Anwendung des beispielsweise in der DE 195 16 230 C2 beschriebenen Verfahrens einem flächigen Materialabtrag unterworfen, wobei insbesondere darauf geachtet wird, dass die Übergänge zwischen dem nicht geschwächten Bereich zum geschwächten Bereich sowie die Querschnittsform der Schwächung selbst stetig ausgestaltet sind. Auf den die Materialabtragung betreffenden Inhalt der oben genannten Druckschriften wird hiermit Bezug genommen. Der diesen technischen Bereich beschreibende Inhalt dieser Druckschriften ist somit Gegenstand der vorliegenden Anmeldung.

In einer bevorzugten Ausführungsform der erfindungsgemäßen Airbagabdeckung ist das Formteil ein Teil der Instrumententafel. In einer besonders bevorzugten Ausführungsform ist dieser Teil im Bereich vor dem Beifahrersitz ausgebildet. Hierdurch wird eine Airbagabdeckung zur Verfügung gestellt, deren besondere Vorteile gerade in dem üblicherweise besonders großflächigen Bereich vor dem Beifahrer besonders vorteilhaft zur Geltung kommt, da hier ein besonders großer Airbag hinter einem besonders großen Formteil angebracht ist und dennoch auf die Einbringung von Nähten gänzlich verzichtet werden kann.

In einer weiteren bevorzugten Ausgestaltung der Erfindung umfasst die Schicht aus weicherem Material ein Abstandsgewirke, wie es dem Fachmann hinlänglich bekannt ist. Dieses Abstandsgewirke weist aufgrund seines besonders großen Gasvolumenanteils und aufgrund seiner besonderen Ausgestaltung mit eine Vorzugsrichtung aufweisenden Fasern eine besonders vorteilhafte Haptik auf, wobei sowohl der Eindrückwiderstand als auch der Verschiebewiderstand beim Eindrücken der als Dekorschicht dienenden Sichtbedeckung die gewünschte Haptik günstig eingestellt werden kann.

In einer alternativen bevorzugten Ausgestaltung der erfindungsgemäßen Airbagabdeckung umfasst die Schicht aus weicherem Material einen Schaumstoff. Hierdurch wird eine Airbagabdeckung geschaffen, die unter Verwendung von besonders kostengünstigen Materialien und bei Anwendung besonders kostengünstiger Herstellungsverfahren sowohl durch die Auswahl der geeigneten Ausgangsmaterialien und Treibmittel als auch durch die Einstellung geeigneter Prozessparameter eine nahezu beliebige Einstellung der Haptik auch bei vorgegebener und konstanter Schichtdicke erlaubt.

In einer weiteren alternativen Ausgestaltung der erfindungsgemäßen Airbagabdeckung umfasst die Schicht aus weicherem Material ein oder mehrere Gelpolster. Hierdurch kann zum einen durch geeignete Platzierung mehrerer Gelpolster die gewünschte Aufreißlinie mit besonders einfachen Mitteln erzeugt werden; zum anderen kann durch diese bevorzugte Ausgestaltung die Haptik der Airbagabdeckung nicht nur nahezu beliebig eingestellt werden, sondern darüber hinaus auch mit besonders einfachen Mitteln eine unterschiedliche Haptik über den gesamten Einbauraum verwirklicht werden.

Bevorzugt wird zwischen dem Formteil und der Sichtbedeckung zusätzlich wenigstens eine Folienschicht angeordnet. In besonders bevorzugter Ausgestaltung der Airbagabdeckung ist diese Folienschicht direkt unterhalb der Sichtbedeckung angeordnet. Hierdurch wird eine Airbagabdeckung geschaffen, bei der auf die Sichtbedeckung wirkende Scherkräfte besonders gut und mit besonders einfachen Mitteln hinreichend kompensiert werden können. Darüber hinaus kann der Verbund zwischen den einzelnen Schichten auch bei Verwendung von weicheren Schichten mit offenporiger Oberfläche und hierdurch verminderter Möglichkeit, einen Klebstoff flächig aufzutragen, mit besonders einfachen Mitteln realisiert werden.

In einer bevorzugten Ausführungsform der Erfindung weist die Sichtbedeckung in ihrem Schwächungsbereich eine maximale Restwandstärke von 0,1 bis 0,6 mm auf. Besonders bevorzugt beträgt die Restwandstärke im Schwächungsbereich maximal 0,2 bis 0,5 mm. Ganz besonders bevorzugt beträgt die minimale Dicke der Sichtbedeckung im Schwächungsbereich 0,35 mm. Hierdurch wird eine Airbagabdeckung geschaffen, bei der zum einen ein für die Risseinleitung und Rissausbreitung ausreichender Materialabtrag erfolgt und zum anderen der Materialabtrag auf das notwendige Minimum reduziert ist. Es wird eine Airbagabdeckung erhalten, bei der die Sichtbedeckung eine sichere und ungehinderte Entfaltung des Airbags gewährleistet.

In einer weiteren bevorzugten Ausgestaltungsform der erfindungsgemäßen Airbagabdeckung weisen das Formteil und die Schicht aus weicherem Material sowie eine ggf. zusätzlich vorgesehene Folienschicht ebenfalls einen Schwächungsbereich auf. In einer besonders bevorzugten Ausgestaltung der Erfindung sind diese Schwächungsbereiche übereinander angeordnet. In einer ganz besonders bevorzugten Ausgestaltung der Erfindung sind diese Schwächungen in Formteil, Schicht aus weicherem Material sowie der Folie durch Einbringen von mindestens einem Einschnitt in die jeweiligen Materialien verwirklicht. Das Einschneiden erfolgt dabei in jeder dem Fachmann bekannten Weise, wobei insbesondere die Verwendung eines Lasers zur Laserperforation der Materialien bevorzugt ist. Hierdurch wird eine Airbagabdeckung geschaffen, die vorzugsweise ohne Einfluss auf die Optik der Sichtbedeckung einen nahezu ungehinderten Rissfortschritt entlang exakt definierter Linien gewährleistet.

In einer weiteren bevorzugten Ausgestaltung der Erfindung verläuft der Schwächungsbereich in der Sichtbedeckung zumindest teilweise oberhalb eines Schwächungsbereichs, der in das Formteil eingebracht wurde. Hierdurch wird eine Airbagabdeckung zur Verfügung gestellt, bei der die Anordnung der Schwächungsbereiche in den verschiedenen Schichten der Airbagabdeckung besonders vorteilhaft aufeinander abgestimmt ist.

Dabei ist es bei geeigneter Ausführungsform eines oder mehrerer Schwächungsbereiche in den verschiedenen Materialien nicht unerlässlich, den Schwächungsbereich der Sichtbedeckung vollständig dem Schwächungsbereich darunter liegender Materialien folgend auszugestalten. Ebenso ist eine Ausgestaltung vom Erfindungsgedanken umfasst, bei der der Schwächungsbereich in der Sichtbedeckung nur über Teillängen der Aufreißlinien innerhalb des Formteils folgt. Dabei muss darüber hinaus der Schwächungsbereich in der Sichtbedeckung auch nicht die gleiche Länge wie der Schwächungsbereich in einer der darunter angeordneten Schichten aufweisen. Schließlich kann es zur Lösung der erfindungsgemäßen Aufgabe ausreichend sein, den Schwächungsbereich innerhalb der Sichtbedeckung ausschließlich im Bereich einer gewünschten Risseinleitung auszugestalten.

In einer weiteren bevorzugten Ausgestaltung der Erfindung wird die partielle Schwächung der Sichtbedeckung in die dem Formteil zugewandte Seite der Sichtbedeckung, somit in die Seite eingebracht, die dem Fahrzeuginsassen abgewandt ist. Hierdurch wird eine Airbagabdeckung zur Verfügung gestellt, die einen Materialabtrag in der Sichtbedeckung ausschließlich in den Bereichen verwirklicht, die beim Zusammenbau der Airbagabdeckung nicht sichtbar sind. Das Erscheinungsbild der Sichtbedeckung, insbesondere eine in Leder oder lederähnlichen Materialien übliche Maserung, wird hierdurch vorteilhafterweise nicht beeinflusst oder gar geschädigt.

Besonders bevorzugt weist das Formteil und/oder die Schicht aus weicherem Material vorzugsweise im Bereich der Schwächung der Sichtbedeckung eine verglichen mit dem übrigen Bereich größere Dicke auf. In einer ganz besonders bevorzugten Ausführungsform der erfindungsgemäßen Airbagabdeckung ist der Bereich mit größerer Dicke dabei so ausgebildet, dass er mit der Schwächung in der Sichtbedeckung in deren Form und/oder Tiefe korrespondiert. Hierdurch wird eine Airbagabdeckung geschaffen, die besonders bevorzugt trotz des Materialabtrags in der Sichtbedeckung eine durchgehend konstante Dicke aufweist. Hierdurch wird sowohl die Bearbeitung mit besonders einfachen Mitteln vereinfacht als auch nahezu gleichmäßige Materialeigenschaften über die gesamte Fläche der Airbagabdeckung geschaffen.

In einer weiteren bevorzugten Ausgestaltung der erfindungsgemäßen Airbagabdeckung weist die Schwächung in der Sichtbedeckung über ihre gesamte Länge eine gleiche Form und/oder Tiefe auf. Hierdurch wird eine Airbagabdeckung geschaffen, die eine besonders einfache und kostengünstige Produktion ohne komplexe Ablaufsteuerung ermöglicht.

In einer alternativen Ausgestaltung der erfindungsgemäßen Airbagabdeckung ist die Schwächung in der Sichtbedeckung jedoch mit einer über die Länge der Schwächung unregelmäßigen Form ausgestattet. Die unregelmäßige Form bezieht sich nicht nur auf die Tiefe der Schwächung, sondern insbesondere auch auf die Form der Übergangsbereiche von nicht geschwächtem zu geschwächtem Bereich und schließlich auch auf die Bereite des geschwächten Bereichs insgesamt. Hierdurch kann bei geeigneter Ausgestaltung der unregelmäßigen Form ein Schwächungsbereich geschaffen werden, der in überaus bevorzugter Weise der Maserung des Leders oder lederähnlichen Materials sowie Materialunregelmäßigkeiten folgt und diese beispielsweise umgeht oder nachzeichnet.

Gemäß der Erfindung ist der Übergang vom geschwächten Bereich in der Sichtbedeckung stetig ausgestaltet. Dies wird auf besonders vorteilhafte Weise dann verwirklicht, wenn der Übergang in der Oberfläche des Schwächungsbereichs eine Kurve ausgehend vom nicht geschwächten Bereich über den geschwächten Bereich wiederum in den nicht geschwächten Bereich beschreibt, die eine stetig zunehmende negative Steigung bis hin zu einem Wendepunkt, dann eine stetig abnehmenden negative Steigung bis hin zu einem Scheitelpunkt der Kurve, anschließend eine stetig ansteigende positive Steigung bis hin zu einem Wendepunkt und daran anschließend eine stetig kleiner werdende positive Steigung bis zum nicht geschwächten Bereich zeigt. Die erste Ableitung einer derartigen Kurve zeigt dann einen sinusförmigen Verlauf. Hierdurch wird eine Airbagabdeckung zur Verfügung gestellt, bei der die in die Sichtbedeckung eingebrachte Schwächung vorzugsweise mit solchen Übergängen ausgestaltet, die weder mit bloßem Auge zu erkennen sind, noch beim Überstreichen mit der Hand ertastbar sind.

Des Weiteren ist in erfindungsgemäßer Weise eine stetige Ausgestaltung des Übergangsbereich vom nicht geschwächten Bereich zum geschwächten Bereich auch dann verwirklicht, wenn insbesondere bei der Ausgestaltung besonders breiter Schwächungsbereiche in der Sichtbedeckung ein kurviger Verlauf nur in den Übergängen vorliegt und im Bereich des maximalen Materialabtrags eine gerader Verlauf eine Ebene beschreibt, die vorzugsweise parallel zu der von der Sichtseite der Sichtbedeckung aufgespannten Ebene liegt.

Gemäß eines zweiten Aspekts der vorliegenden Erfindung wird ein Verfahren zum Abdecken eines oberhalb eines Airbags angeordneten Formteils mit einer partiell geschwächten Sichtbedeckung zur Verfügung gestellt. Dieses Verfahren beinhaltet die Schritte des Einbringens eines Schwächungsbereichs in das die Sichtbedeckung bildende Leder oder lederähnliche Material auf der der Sichtseite abgewandten Seite der Sichtbedeckung, wobei der Übergang vom geschwächten Bereich zum nicht geschwächten Bereich stetig ausgestaltet ist, des Weiteren das Aufbringen von wenigstens einer Schicht aus einem Material, das weicher ausgestaltet ist als das Material des Formteils, auf das Formteil selbst, sowie das Aufbringen der Sichtbedeckung auf die Schicht aus weicherem Material.

Hierdurch wird ein Verfahren zur Verfügung gestellt, welches mit besonders einfachen Mitteln in der Lage ist, die erfindungsgemäße Aufgabe zu lösen.

In einer vorteilhaften Ausgestaltung des erfindungsgemäßen Verfahrens wird wenigstens eine zusätzliche Folienschicht zwischen das Formteil und die Sichtbedeckung eingebracht. Diese Folienschicht kann in erfindungsgemäßer Weise sowohl direkt unterhalb der Sichtbedeckung als auch direkt oberhalb des Formteils oder aber zwischen mehreren Schichten aus weicherem Material sowie in einer Kombination der dargestellten Anordnungen eingefügt werden. Hierdurch wird ein Verfahren zur Verfügung gestellt, welches mit besonders einfachen Mitteln eine Airbagabdeckung herstellen kann, die eine besonders große Vielfalt an weichen Materialien aufweisen kann.

Gemäß einem weiteren bevorzugten Verfahren werden vor dem Zusammenfügen der einzelnen Schichten der Airbagabdeckung oder beim Hinterspritzen einzelner Schichten mit einem aushärtenden Kunststoff die Dicken einzelner oder mehrerer Schichten, somit des Formteils und/oder der Schicht aus weicherem Material insbesondere im Bereich der Schwächung der Sichtbedeckung mit einer größeren Dicke versehen als die restlichen Bereiche. In besonders bevorzugter Weise korrespondiert dieser Bereich größerer Dicke in einer oder mehrerer der unterhalb der Sichtbedeckung angeordneten Schichten mit der Form und/oder Tiefe der Schwächung in der Sichtbedeckung. Hierdurch wird ein Verfahren zur Verfügung gestellt, welches mit besonders einfachen Mitteln eine Airbagabdeckung herstellbar macht, deren Dicke vorzugsweise über die gesamte Fläche der Airbagabdeckung konstant ist.

Dem Fachmann ist dabei aus der oben dargelegten Beschreibung der beiden Aspekte gemäß der Erfindung ersichtlich, dass in besonders bevorzugter Weise das erfindungsgemäße Verfahren zur Erzeugung einer erfindungsgemäßen Airbagabdeckung, insbesondere einer erfindungsgemäßen Airbagabdeckung gemäß einer der oben dargestellten bevorzugten Ausführungsformen geeignet ist.

### Kurze Beschreibung der Figuren

Die Erfindung wird nunmehr unter Bezugnahme auf eine Reihe von bevorzugten Ausführungsformen dargestellt. Dabei sind die in den Figuren angegebenen Ausgestaltungen nur beispielhaft und nicht dazu geeignet, den der Erfindung zu Grunde liegenden Gedanken in irgendeiner Weise einzuschränken.

In den Figuren zeigt:
Fig. 1 eine Querschnittsansicht durch eine Airbagabdeckung gemäß einer ersten Ausführungsform der Erfindung,
Fig. 2 eine schematische Draufsicht auf den Schwächungsbereich der Sichtbedeckung gemäß einer ersten Ausführungsform der Erfindung,
Fig. 3 eine schematische Ansicht des Schwächungsbereichs der Sichtbedeckung gemäß einer zweiten Ausführungsform der Erfindung.
Fig. 4 eine schematische Ansicht des Schwächungsbereichs der Sichtbedeckung gemäße einer dritten Ausführungsform der Erfindung,
Fig. 5 eine schematische Ansicht des Schwächungsbereichs der Sichtbedeckung gemäß einer vierten Ausführungsform der Erfindung,
Fig. 6 eine schematische Ansicht des Schwächungsbereichs der Sichtbedeckung gemäß einer fünften Ausführungsform der Erfindung,
Fig. 7 eine Querschnittsansicht durch eine Airbagabdeckung gemäß einer zweiten Ausführungsform der Erfindung,
Fig. 8 eine Querschnittsansicht durch eine Airbagabdeckung gemäß einer dritten Ausführungsform der Erfindung.

### Wege zur Ausführung der Erfindung

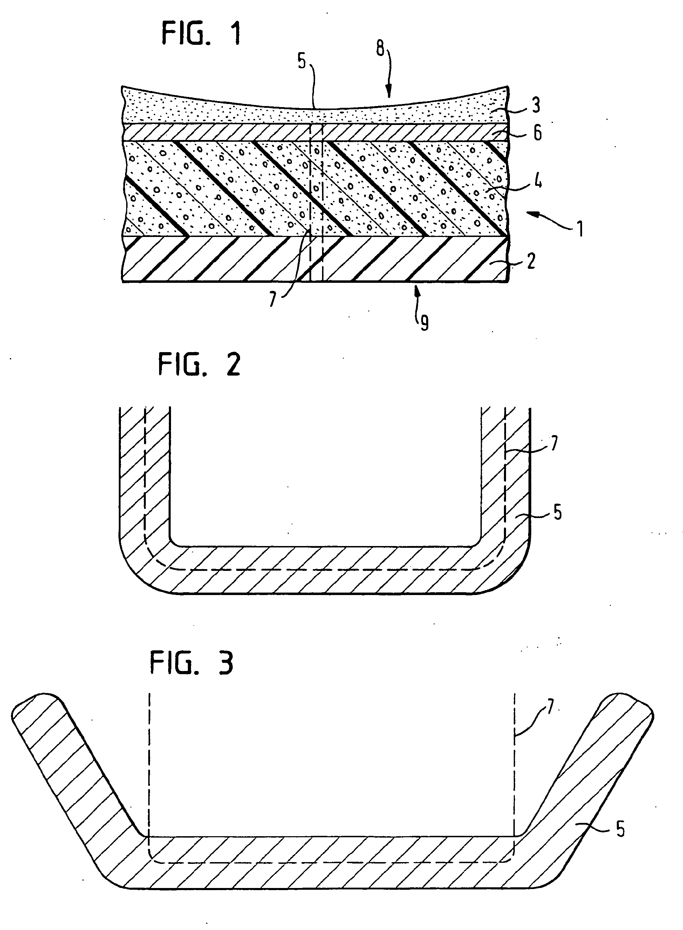

In Fig. 1 ist eine schematische Querschnittsansicht einer Airbagabdeckung 1 gemäß einer ersten Ausführungsform dargestellt, wobei die Airbagabdeckung 1 generell aus vier übereinander angeordneten Schichten besteht. Oberhalb des der Sichtseite 8 abgewandten Seite 9 und des (nicht gezeigten) Airbagmoduls ist ein Formteil 2 aus einem formsteifen Kunststoff angebracht. Oberhalb dieses Formteils 2 ist eine geschlossenporige Schaumstoffschicht 4 angeordnet. Oberhalb dieser weichen Schaumstoffschicht 4 und unterhalb einer zur Sichtseite 8 hin abschließenden Sichtbedeckung 3 aus Leder ist eine zusätzliche Folienschicht 6 in die Airbagabdeckung 1 eingearbeitet. Die Sichtbedeckung 3 weist einen Schwächungsbereich 5 auf, der sich in der gezeigten Darstellung über die gesamte Breite der Figur erstreckt. In das Formteil 2, die Schaumstoffschicht 4 sowie die Folienschicht 6 ist überdies ein Hinterschnitt 7 eingebracht, der vorzugsweise exakt unterhalb des Scheitelpunkts der Kurve, die den Schwächungsbereich 5 nachzeichnet, angeordnet ist. Eine solche bevorzugte und exakte Ausrichtung des Schwächungsbereichs 7 zum Schwächungsbereich 5 ist jedoch nicht zwingend erforderlich. Diese Airbagabdeckung 1 wird bevorzugt so hergestellt, dass zuerst das Formteil 2, die Schaumstoffschicht 4 sowie die Folienschicht 6 miteinander verbunden werden und in diesem Verbund ein gemeinsamer Schwächungsbereich 7, üblicherweise in der Form zueinander ausgerichteter kurzer Schwächungsbereiche oder aber einer Zickzack-Linie folgender Schwächungsbereiche, eingebracht wird. Die Sichtbedeckung 3 wird in einem gesonderten Arbeitsgang auf der dem Verbund aus Formteil 2, Schaumstoffschicht 4 und Folie 6 zugewandten Seite 9 durch Materialabtrag bearbeitet. Anschließend wird der Verbund 2, 4, 6 mit der so bearbeiteten Sichtbedeckung 3 flächig verklebt, so dass aufgrund der vorher auf der Rückseite vorgenommenen Materialabtragung eine Airbagabdeckung 1 erzeugt wird, die im Schwächungsbereich 5 eine Vertiefung zur Sichtseite 8 hin aufweist.

In Fig. 2 ist die Anordnung des Schwächungsbereichs 5 der Sichtbedeckung (nicht gezeigt) oberhalb der mit der gestrichelten Linie dargestellten Schwächung des Formteils und sämtlicher darüber angeordneter Schichten dargestellt. Der Schwächungsbereich 5 der Sichtbedeckung ist schraffiert dargestellt und weist trotz seines stetigen und bevorzugt sehr sanften Übergangs vom nicht geschwächten Bereich der Sichtbedeckung zum geschwächten Bereich 5 eindeutig parallel zueinander angeordnete Seiten auf. Der Schwächungsbereich 5 ist in dieser Ausführungsform über die gesamte Länge des Schwächungsbereichs 7 des Formteils folgend angeordnet. Darüber hinaus verläuft der Schwächungsbereich 7 direkt unterhalb des Bereichs der Schwächung 5 mit maximaler Tiefe.

In Fig. 3 ist eine weitere Ausführungsform des Schwächungsbereichs 5 der Sichtbedeckung (nicht gezeigt) dargestellt, die im Wesentlichen der Schwächung 7 innerhalb eines Formteils (nicht gezeigt) nur entlang einer einzigen Geraden folgt. Während der Schwächungsbereich 7 des Formteils im Wesentlichen rechtwinklig ausgestaltet ist und somit eine rechteckige Platte oberhalb eines (nicht gezeigten) Airbagmoduls nachzeichnet, weist die vom Schwächungsbereich 5 der Sichtbedeckung (nicht gezeigt) nachgezeichnete Linie einen symmetrischen Verlauf mit Winkeln deutlich größer als 90° auf.

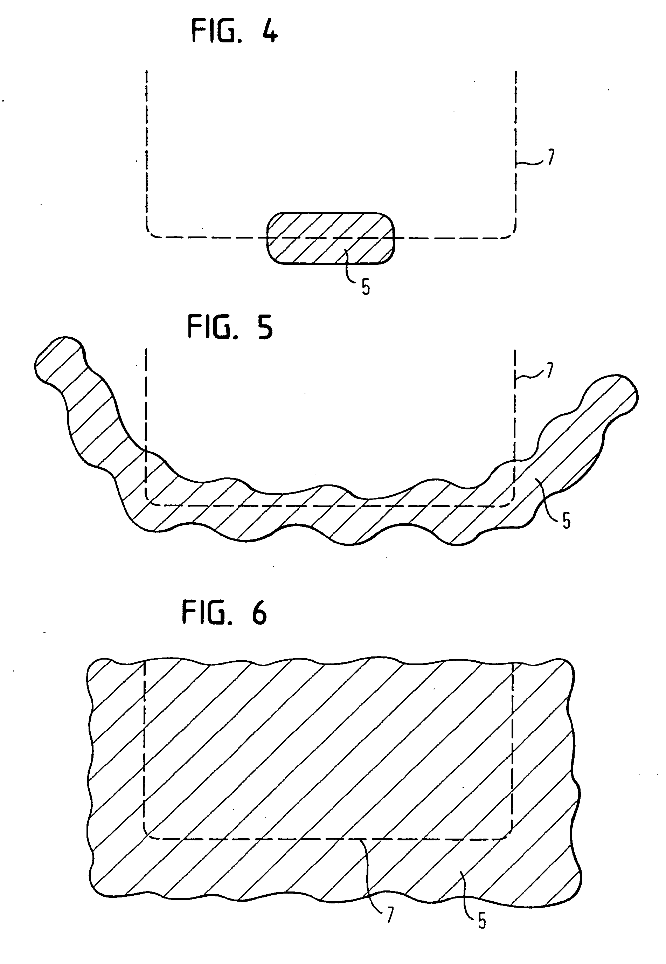

In Fig. 4 wird eine weitere Ausführungsform des Schwächungsbereichs 5 der Sichtbedeckung gezeigt, die nur in einem Teilbereich der Airbagabdeckung (nicht gezeigt) und oberhalb der Schwächung 7 innerhalb der unter der Sichtbedeckung angeordneten Schichten ausgestaltet ist. Die Schwächung 5 bildet hierbei nur den Bereich der Risseinleitung in die Sichtbedeckung aus, wobei bei Auslösen des Airbags der weitere Rissfortschritt allein durch den Schwächungsbereich 7 vorgegeben wird.

In Fig. 5 ist eine weitere Ausführungsform eines erfindungsgemäßen Schwächungsbereichs dargestellt, dessen Ausrichtung im Wesentlichen der aus Fig. 3 gezeigten Ausführungsform entspricht. Darüber hinaus sind jedoch die Seitenbereiche des Schwächungsbereichs 5 zumindest in Teilen nicht parallel zueinander ausgerichtet und die Seitenlinien des Schwächungsbereichs 5 folgen vorzugsweise individuell der Maserung oder einer anderen Materialbeschaffenheit der Sichtbedeckung.

In Fig. 6 ist eine weitere Ausgestaltung einer erfindungsgemäßen Airbagabdeckung dargestellt, bei der der Schwächungsbereich 5 der Sichtbedeckung großflächig oberhalb der von der Schwächungslinie 7 im Formteil nachgezeichneten Airbagklappe ausgestaltet ist. Dabei können in dieser Ausgestaltungsform die Kantenbereiche der Schwächung 5 sowohl geradlinig als auch, wie dies in der Figur dargestellt ist, entlang unregelmäßiger oder gewellter Linien verlaufend ausgestaltet sein.

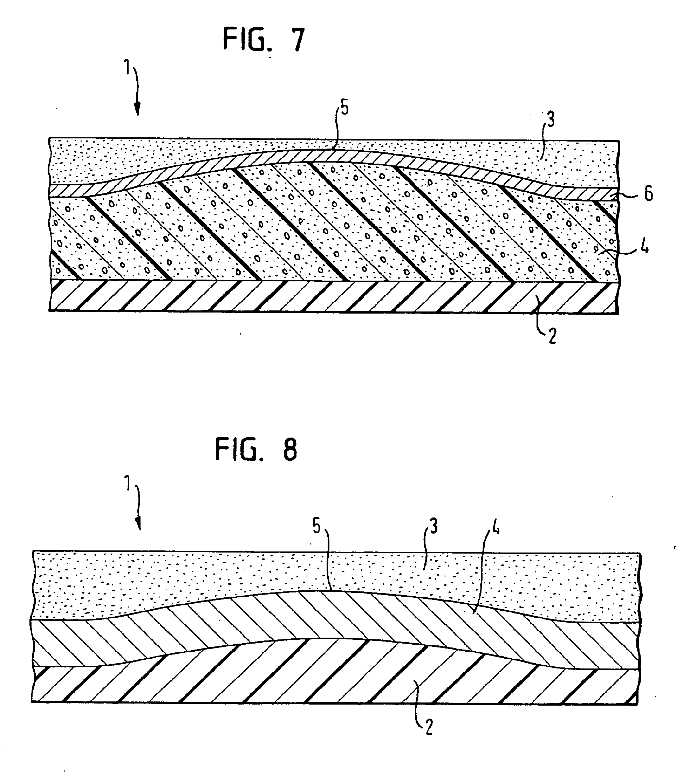

In Fig. 7 wird eine Querschnittsansicht einer zweiten Ausführungsform einer erfindungsgemäßen Airbagabdeckung 1 dargestellt, die, wie dies auch in Fig. 1 verwirklicht ist, aus einem Formteil 2, einer Schaumstoffschicht 4, einer Folienschicht 6 sowie einer darüber angeordneten Sichtbedeckung 3 aus Leder aufgebaut ist. Die Sichtbedeckung 3 weist einen Schwächungsbereich 5 auf, bei dem die Übergänge vom nicht geschwächten Bereich (rechts und links in der Figur) in den geschwächten Bereich 5 (mittig in der Figur) stetig und einer Kurve folgend dargestellt ist, deren erste Ableitung einen sinusförmigen Verlauf zeigt. In der gezeigten Ausführungsform ist die Dicke des Schaumstoffs 4 über die Breite der gezeigten Darstellung so ausgestaltet, dass Form und Dicke der Schaumstoffschicht 4 und der Sichtbedeckung 3 miteinander korrespondieren, so dass die Gesamtdicke der Airbagabdeckung 1 über den gezeigten Bereich konstant ist.

In Fig. 8 wird eine weitere Ausführungsform einer erfindungsgemäßen Airbagabdeckung 1 dargestellt, die analog zu der in Fig. 7 dargestellten Ausführungsform ebenfalls über ihre gesamte Breite eine konstante Dicke aufweist. In dieser Ausführungsform wird die konstante Dicke der Airbagabdeckung 1 dadurch erzielt, dass die Form des Formteils 2 mit der Form der Sichtbedeckung 3 so korrespondiert, dass der Schwächungsbereich 5 in der Sichtbedeckung 3 vollständig von dem gezeigten Bereich mit größerer Dicke des Formteils 2 ausgeglichen wird. Dabei kann in dieser Ausführungsform ein Abstandsgewirke 4 zwischen dem Formteil 2 und der Sichtbedeckung 3 mit konstanter Dicke verwendet werden.

## Patentansprüche

1. Airbagabdeckung (1), insbesondere zur Verwendung in Kraftfahrzeugen, mit:
einem Formteil (2) und einer das Formteil (2) überdeckenden Sichtbedeckung (3) aus Leder oder einem lederähnlichen Material, wobei
zwischen dem Formteil (2) und der Sichtbedeckung (3) wenigstens eine Schicht (4) aus einem Material angeordnet ist, das weicher ist als das Material des Formteils (2), und die Sichtbedeckung (3) eine partielle Schwächung (5) aufweist **dadurch gekennzeichnet, dass** der Übergang vom geschwächten Bereich (5) zum nicht geschwächten Bereich stetig ausgestaltet ist.

2. Airbagabdeckung (1) gemäß Anspruch 1, **dadurch gekennzeichnet, dass** das Formteil (2) einen Teil der Instrumententafel, vorzugsweise im Bereich vor dem Beifahrersitz, ausbildet.

3. Airbagabdeckung (1) gemäß einem der voranstehenden Ansprüche, **dadurch gekennzeichnet, dass** die Schicht (4) aus weicherem Material ein Abstandsgewirke umfasst.

4. Airbagabdeckung (1) gemäß einem der Ansprüche 1 und 2, **dadurch gekennzeichnet, dass** die Schicht (4) aus weicherem Material einen Schaumstoff umfasst.

5. Airbagabdeckung (1) gemäß einem der Ansprüche 1 und 2, **dadurch gekennzeichnet, dass** die Schicht (4) aus weicherem Material ein oder mehrere Gelpolster umfasst.

6. Airbagabdeckung (1) gemäß einem der voranstehenden Ansprüche, **dadurch gekennzeichnet, dass** zwischen dem Formteil (2) und der Sichtbedeckung (3), vorzugsweise direkt unterhalb der Sichtbedeckung (3), zusätzlich wenigstens eine Folienschicht (6) angeordnet ist.

7. Airbagabdeckung (1) gemäß einem der voranstehenden Ansprüche, **dadurch gekennzeichnet, dass** der Schwächungsbereich (5) eine maximale Restwandstärke von 0,1 bis 0,6 mm, vorzugsweise von 0,2 bis 0,5 mm, aufweist.

8. Airbagabdeckung (1) gemäß eine der voranstehenden Ansprüche, **dadurch gekennzeichnet, dass** das Formteil (2), die Schicht (4) aus weicherem Material sowie ggf. die Folienschicht (6) einen vorzugsweise übereinander angeordneten Schwächungsbereich (7) aufweisen.

9. Airbagabdeckung (1) gemäß Anspruch 8, **dadurch gekennzeichnet, dass** die Schwächung (7) in Formteil (2), Schicht (4) aus weicherem Material sowie ggf. in der Folie (6) mittels wenigstens eines Einschnitts verwirklicht ist.

10. Airbagabdeckung (1) gemäß Anspruch 8, **dadurch gekennzeichnet, dass** der Einschnitt eine Abfolge zueinander ausgerichteter Teileinschnitte ist, die vorzugsweise mittels Laserperforation erzeugbar sind.

11. Airbagabdeckung (1) gemäß einem der voranstehenden Ansprüche, **dadurch gekennzeichnet, dass** der Schwächungsbereich (5) der Sichtbedeckung (3) zumindest teilweise oberhalb eines Schwächungsbereichs (7) innerhalb des Formteils (2) verläuft.

12. Airbagabdeckung (1) gemäß einem der voranstehenden Ansprüche, **dadurch gekennzeichnet, dass** die partielle Schwächung (5) der Sichtbedeckung (3) in die dem Formteil (2) zugewandte Seite der Sichtbedeckung (3) eingebracht ist.

13. Airbagabdeckung (1) gemäß einem der voranstehenden Ansprüche, **dadurch gekennzeichnet, dass** das Formteil (2) und/oder die Schicht (4) aus weicherem Material vorzugsweise im Bereich der Schwächung (5) der Sichtbedeckung (3) eine verglichen mit dem übrigen Bereich größere Dicke aufweisen.

14. Airbagabdeckung (1) gemäß Anspruch 13, **dadurch gekennzeichnet, dass** der Bereich größerer Dicke von Formteil (2) und/oder weicherem Material (4) mit der Schwächung (5) in der Sichtbedeckung (3) in Form und/oder Tiefe korrespondiert.

15. Airbagabdeckung (1) gemäß einem der voranstehenden Ansprüche, **dadurch gekennzeichnet, dass** die Schwächung (5) in der Sichtbedeckung (3) über die gesamte Länge der Schwächung (5) eine gleiche Form und/oder Tiefe aufweist.

16. Airbagabdeckung (1) gemäß einem der Ansprüche 1 bis 14, **dadurch gekennzeichnet, dass** die Schwächung (5) in der Sichtbedeckung (3) über die Länge der Schwächung (5) eine unregelmäßige Form aufweist.

17. Airbagabdeckung (1) gemäß einem der voranstehenden Ansprüche, **dadurch gekennzeichnet, dass** der Übergang in der Oberfläche des Schwächungsbereichs (5) der Sichtbedeckung (3) eine Kurve beschreibt, deren erste Ableitung einen sinusförmigen Verlauf aufweist.

18. Verfahren zum Abdecken eines oberhalb eines Airbags angeordneten Formteils (2) mit einer partiell geschwächten Sichtbedeckung (3), **gekennzeichnet durch** die folgenden Schritte:
- Einbringen eines Schwächungsbereichs (5) in das die Sichtbedeckung (3) bildende Leder oder lederähnliche Material auf der der Sichtseite (8) abgewandten Seite (9) der Sichtbedeckung (3), wobei der Übergang vom geschwächten Bereich (5) zum nicht geschwächten Bereich stetig ausgestaltet ist,
- Aufbringen auf das Formteil (2) von wenigstens einer Schicht (4) aus einem Material, das weicher ausgestaltet ist als das Material des Formteils (2), und
- Aufbringen der Sichtbedeckung (3) auf die Schicht (4) aus weicherem Material.

19. Verfahren gemäß Anspruch 18, **dadurch gekennzeichnet, dass** wenigstens eine zusätzliche Folienschicht (6) zwischen das Formteil (2) und die Sichtbedeckung (3) eingebracht wird.

20. Verfahren gemäß Anspruch 18 oder 19, **dadurch gekennzeichnet, dass** vor dem Zusammenfügen der einzelnen Schichten (2, 3, 4) ein Schwächungsbereich (7) in das Formteil (2) und/oder wenigstens eine Schicht (4) aus weicherem Material und/oder wenigstens eine Folie (6) eingebracht wird.

21. Verfahren gemäß einem der Ansprüche 18 bis 20, **dadurch gekennzeichnet, dass** das weichere Material (4) ein Abstandsgewirke und/oder einen Schaumstoff und/oder ein oder mehrere Gelpolster umfasst.

22. Verfahren gemäß einem der Ansprüche 18 bis 21, **dadurch gekennzeichnet, dass** das Formteil und/oder die Schicht (4) aus weicherem Material vorzugsweise im Bereich der Schwächung (5) der Sichtbedeckung (3) eine verglichen mit dem übrigen Bereich größere Dicke aufweist und dass dieser Bereich größerer Dicke mit der Schwächung (5) in der Sichtbedeckung (3) in Form und/oder Tiefe korrespondiert.

23. Verfahren gemäß einem der Ansprüche 18 bis 22, **dadurch gekennzeichnet, dass** es zur Herstellung der Airbagabdeckung (1) gemäß einem der Ansprüche 1 bis 17 dient.

## Claims

1. Airbag cover (1), in particular for use in motor vehicles having:
a moulding (2) and a visible cover (3) covering the moulding (2) made of leather or leather-like material, where
between the moulding (2) and the visible cover (3) is disposed at least one layer (4) of a material that is softer than the material of the moulding (2), and the visible cover (3) has a partial weakening (5), **characterised in that** the transition from the weakened area (5) to the non-weakened area is designed constant.

2. Airbag cover (1) according to claim 1, **characterised in that** the moulding (2) forms part of the dashboard, preferably in the region in front of the passenger seat.

3. Airbag cover (1) according to one of the preceding claims, **characterised in that** the layer (4) of softer material comprises a spacer fabric.

4. Airbag cover (1) according to one of the claims 1 and 2, **characterised in that** the layer (4) of softer material comprises a foam material.

5. Airbag cover (1), according to one of the claims 1 and 2, **characterised in that** the layer (4) of softer material comprises one or more gel cushions.

6. Airbag cover (1), according to any of the preceding claims, **characterised in that** between the moulding (2) and the visible cover (3), preferably below the visible cover (3), is additionally disposed at least one film layer (6).

7. Airbag cover (1) according to any of the preceding claims, **characterised in that** the weakening area (5) has a maximum residual wall thickness of 0.1 to 0.6 mm, preferably 0.2 to 0.5 mm.

8. Airbag cover (1) according to any of the preceding claims, **characterised in that** the moulding (2), the layer (4) of softer material and where applicable the film layer (6) each have a weakening area (7) that are preferably disposed above each other.

9. Airbag cover (1) according to claim 8, **characterised in that** the weakening (7) in the moulding (2), layer (4) of softer material and where applicable in the film (6), is implemented by at least one cut.

10. Airbag cover (1) according to claim 8, **characterised in that** the cut is a succession of partial cuts aligned to each other which can preferably be produced by means of laser perforation.

11. Airbag cover (1) according to any of the preceding claims, **characterised in that** the weakening area (5) of the visible cover (3) runs at least partly above a weakening area (7) within the moulding (2).

12. Airbag cover (1) according to any of the preceding claims, **characterised in that** the partial weakening (5) of the visible cover (3) is made in the side of the visible cover (3) facing the moulding (2).

13. Airbag cover (1) according to any of the preceding claims, **characterised in that** the moulding (2) and/or the layer (4) of softer material (4), preferably in the area of the weakening (5) of the visible cover (3), have a greater thickness than the other areas.

14. Airbag cover (1) according to claim 13, **characterised in that** the area of greater thickness of the moulding (2) and/or softer material (4) corresponds in form and/or depth to the weakening (5) in the visible cover (3).

15. Airbag cover (1) according to any of the preceding claims, **characterised in that** the weakening (5) in the visible cover (3) has the same form and/or depth over the entire length of the weakening (5).

16. Airbag cover (1) according to any of claims 1 to 14, **characterised in that** the weakening (5) in the visible cover (3) has an irregular form over the length of the weakening (5).

17. Airbag cover (1) according to any of the preceding claims, **characterised in that** the transition in the surface of the weakening area (5) of the visible cover (3) describes a curve, the first derivative of which has a sinusoidal course.

18. Method for covering a moulding (2) disposed above an airbag with a partially weakened visible cover (3), **characterised by** the following steps:
- production of a weakening area (5) in the leather or leather-like material forming the visible cover (3) on the side (9) of the visible cover (3) facing away from the visible side (8), the transition from the weakened area (5) to the non-weakened area being designed constant,
- application to the moulding (2) of at least one layer (4) of a material which is designed softer than the material of the moulding (20, and
- application of the visible cover (3) to the layer (4) of softer material.

19. Method according to claim 18, **characterised in that** at least one additional film layer (6) is inserted between the moulding (2) and the visible cover (3).

20. Method according to claim 18 or 19, **characterised in that** before the individual layers (2, 3, 4) are joined together, a weakening area (7) is made in the moulding (2) and/or at least one layer (4) of softer material and/or at least one film (6).

21. Method according to any of claims 18 to 20, **characterised in that** the softer material (4) comprises a spacer fabric and/or a foam material and/or one or several gel cushions.

22. Method according to any of claims 18 to 21, **characterised in that** the moulding and/or the layer (4) of softer material, preferably in the area of the weakening (5) of the visible cover (3), have a thickness which is greater than the other areas and that this area of greater thickness corresponds to the weakening (5) in the visible cover (3) in form and/or depth.

23. Method according to any of claims 18 to 22, **characterised in that** it serves for production of the airbag cover (1) according to any of claims 1 to 17.

## Revendications

1. Couvercle pour sac gonflable de sécurité (1), en particulier pour utilisation dans des véhicules automobiles, avec :
une pièce de forme (2) et une pièce de masquage (3) recouvrant la pièce de forme (2), réalisée en cuir ou en un matériau analogue à du cuir, où
entre la pièce de forme (2) et la pièce de masquage (3) est disposée au moins une couche (4) en un matériau, plus souple que le matériau de la pièce de forme (2), et la pièce de masquage (3) présente un affaiblissement (5) partiel, **caractérisé en ce que** la transition entre la zone (5) affaiblie et la zone non affaiblie est continue.

2. Couvercle pour sac gonflable de sécurité selon la revendication 1, **caractérisé en ce que** la pièce de forme (2) constitue une partie du tableau de bord, de préférence dans la zone située devant le siège de passager.

3. Couvercle pour sac gonflable de sécurité selon l'une des revendications précédentes, **caractérisé en ce que** la couche (4), réalisée en matériau plus souple, comprend un tricot d'espacement.

4. Couvercle pour sac gonflable de sécurité selon l'une des revendications 1 et 2, **caractérisé en ce que** la couche (4), réalisée en matériau plus souple, comprend un matériau alvéolaire.

5. Couvercle pour sac gonflable de sécurité selon l'une des revendications 1 et 2, **caractérisé en ce que** la couche (4), formée d'un matériau plus souple, comprend un ou plusieurs coussins en gel.

6. Couvercle pour sac gonflable de sécurité selon l'une des revendications précédentes, **caractérisé en ce qu'**entre la pièce de forme (2) et la pièce de masquage (3), de préférence directement au-dessous de la pièce de masquage (3), est disposée en plus au moins une couche en feuille (6).

7. Couvercle pour sac gonflable de sécurité selon l'une des revendications précédentes, **caractérisé en ce que** la zone d'affaiblissement (5) présente une épaisseur de paroi résiduelle maximale de 0,1 à 0,6 mm, de préférence de 0,2 à 0,5 mm.

8. Couvercle pour sac gonflable de sécurité selon l'une revendications précédentes, **caractérisé en ce que** la pièce de forme (2), la couche (4) en matériau plus souple, ainsi que, le cas échéant, la couche en feuille (6), présentent une zone d'affaiblissement (7), toutes disposées, de préférence, les unes au-dessus des autres.

9. Couvercle pour sac gonflable de sécurité selon la revendication 8, **caractérisé en ce que** l'affaiblissement (7), ménagé dans la pièce de forme (2), dans la couche (4) en matériau plus souple, ainsi que, le cas échéant, dans la feuille (6), est réalisé à l'aide d'au moins une entaille.

10. Couvercle pour sac gonflable de sécurité selon la revendication 8, **caractérisé en ce que** l'entaille est une succession d'entailles partielles orientées les unes par rapport aux autres, qui, de préférence, peuvent être produites par perforation au laser.

11. Couvercle pour sac gonflable de sécurité selon l'une des revendications précédentes, **caractérisé en ce que** la zone d'affaiblissement (5) de la pièce de masquage (3) s'étend au moins partiellement au-dessus d'une zone d'affaiblissement (7) à l'intérieur de la pièce de forme (2).

12. Couvercle pour sac gonflable de sécurité selon l'une des revendications précédentes, **caractérisé en ce que** l'affaiblissement (5) partiel de la pièce de masquage (3) est intégré dans la face, tournée vers la pièce de forme (2), de la pièce de masquage (3).

13. Couvercle pour sac gonflable de sécurité selon l'une des revendications précédentes, **caractérisé en ce que** la pièce de forme (2) et/ou la couche (4), formée d'un matériau plus souple, présente(nt), de préférence, dans la zone de l'affaiblissement (5) de la pièce de masquage (3), une épaisseur supérieure à celle des autres zones.

14. Couvercle pour sac gonflable de sécurité selon la revendication 13, **caractérisé en ce que** la zone à plus grande épaisseur, de la pièce de forme (2) et/ou du matériau (4) plus souple, correspond, en forme et/ou en profondeur, à l'affaiblissement (5) managé dans la pièce de masquage (3).

15. Couvercle pour sac gonflable de sécurité selon l'une des revendications précédentes, **caractérisé en ce que** l'affaiblissement (5) ménagé dans la pièce de masquage (3) présente sur la totalité de la longueur de l'affaiblissement (5) une profondeur et/ou une forme identique(s).

16. Couvercle pour sac gonflable de sécurité selon l'une des revendications 1 à 14, **caractérisé en ce que** l'affaiblissement (5) dans la pièce de masquage (3) présente, sur la longueur de l'affaiblissement (5), une forme irrégulière.

17. Couvercle pour sac gonflable de sécurité selon l'une des revendications précédentes, **caractérisé en ce que** la transition dans la surface de la zone d'affaiblissement (5) de la pièce de masquage (3) décrit une courbe dont la dérivée première présente une allure sinusoïdale.

18. Procédé de recouvrement d'une pièce de forme (2) disposée au-dessus d'un sac gonflable de sécurité, avec une pièce de masquage (3) affaiblie, **caractérisé par** les étapes suivantes:
- insertion d'une zone d'affaiblissement (5) dans le matériau en cuir ou analogue au cuir, formant la pièce de masquage (3), sur la face (9), opposée à la face visible (8), de la pièce de masquage (3), la transition entre la zone (5) affaiblie et la zone non affaiblie étant continue,
- application sur la pièce de forme (2) d'au moins une couche (4) en un matériau plus souple que le matériau de la pièce de forme (2), et
- application de la pièce de masquage (3) sur la couche (4) en matériau plus souple.

19. Procédé selon la revendication 18, **caractérisé en ce qu'**au moins une couche de feuille (6) supplémentaire est introduite entre la pièce de forme (9) et la pièce de masquage (3).

20. Procédé selon la revendication 18 ou 19, **caractérisé en ce que**, avant l'assemblage des différentes couches (2, 3, 4), une zone d'affaiblissement (7) est introduite dans la pièce de forme (2) et/ou dans au moins une couche (4) en matériau plus souple et/ou dans au moins une feuille (6).

21. Procédé selon l'une des revendications 18 à 20, **caractérisé en ce que** le matériau (4) plus souple comprend un tricot d'espacement et/ou un matériau alvéolaire et/ou un ou plusieurs coussin(s) en gel.

22. Procédé selon l'une des revendications 18 à 21, **caractérisé en ce que** la pièce de forme et/ou la couche (4) en matériau plus souple, de préférence dans la zone de l'affaiblissement (5) de la pièce de masquage (3), présente(nt) une épaisseur supérieure à celle qu'il y a dans les autres zones, et **en ce que** cette zone de plus grande épaisseur correspond, en forme et/ou en profondeur, à l'affaiblissement (5), ménagé dans la pièce de masquage (3).

23. Procédé selon l'une des revendications 18 à 22,
**caractérisé en ce qu'**il sert à la fabrication du couvercle de sac gonflable de sécurité (1) selon l'une des revendications 1 à 17.
